Europäisches Patentamt

European Patent Office

Office européen des brevets

(11) Publication number: **0 310 217**
**A2**

# EUROPEAN PATENT APPLICATION

(21) Application number: 88305415.7

(22) Date of filing: 14.06.88

(51) Int. Cl.4: **B41J 3/02 , B41J 3/04**

(30) Priority: 28.09.87 US 101815

(43) Date of publication of application:
05.04.89 Bulletin 89/14

(84) Designated Contracting States:
CH DE FR GB IT LI NL

(71) Applicant: DATAPRODUCTS CORPORATION
6200 Canoga Avenue
Woodland Hills California 91365(US)

(72) Inventor: Loiselle, David Charles
15 Windham Depot Road
Derry, NH 03038(US)

(74) Representative: Allman, Peter John et al
MARKS & CLERK Suite 301 Sunlight House
Quay Street
Manchester M3 3JY(GB)

(54) Circuit for driving dot matrix printers with individually positioned print elements.

(57) A circuit for reorganizing a bit mapped source image into a print image is disclosed. The circuit can be used to simultaneously actuate individually located print elements of a printer. Offset values corresponding to the individual positions of each print element are stored in an offset memory. The offset values are each added to a base address to generate an addressing mask for accessing desired bits of a source image stored in a source image memory.

## CIRCUIT FOR DRIVING DOT MATRIX PRINTERS WITH INDIVIDUALLY POSITIONED PRINT ELEMENTS

### BACKGROUND OF THE INVENTION

#### 1. Field of the Invention

The present invention is directed generally to dot matrix printers. More specifically, it is directed to a circuit for driving a dot matrix type of print head having a plurality of individually positioned print elements.

#### 2. Description of the Prior Art

Character fonts are typically stored in a computer memory in the form of a grid mapped image composed of pixels. The image is usually organized in the memory as a sequential plurality of bytes or data words, each of which consists of a fixed number of bits (i.e. 8 or 16 bits). Each byte or word is allocated for storage in a unique location (address) within the memory. A specific one or more of the bits within each word are designated to represent information about the pixels of the image. When needed, this pixel information can be accessed only by first addressing the individual data words of the memory one at a time. A problem is presented when a number of bits belonging to different data words are to be processed simultaneously.

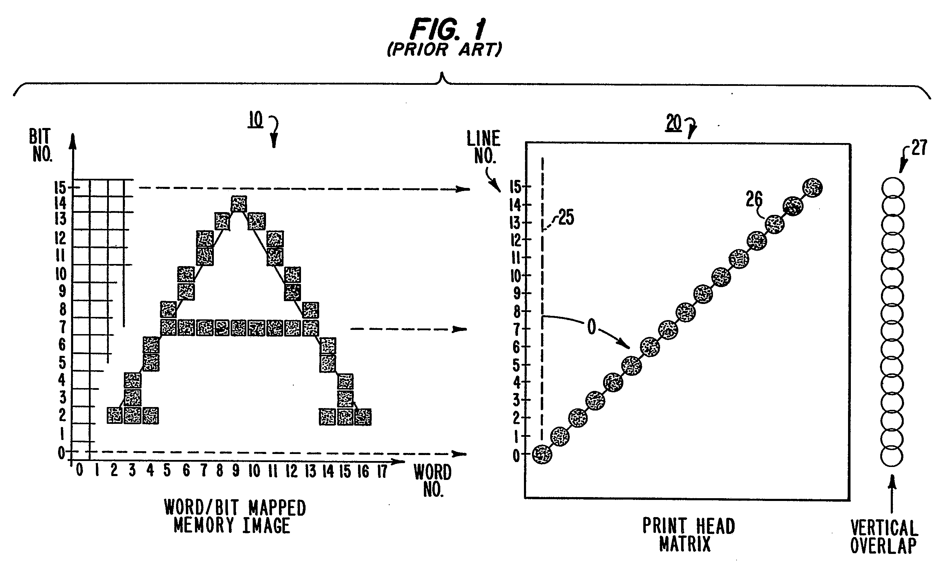

Figure 1 illustrates by way of example, a memory image 10 of the letter "A". The image is set in a memory grid of eighteen words. Each word is shown as a vertical column formed of sixteen bits numbered 0-15. The eighteen data words are stored in sequential memory address locations, numbered 0-17. Each address number provides access only to those bits aligned directly above it.

When a hard copy of the memory image 10 is to be reproduced on a dot matrix printer having multiple print elements that are to be actuated simultaneously, data words 0-17 need to be individually addressed, pixel information has to be extracted from each, and the appropriate printing elements of the dot matrix print head have to be actuated in accordance with the pixel information represented by the corresponding bits 0-15 of each data word.

The simplest case is one where the print head has a vertical array of print elements equal in number to the vertically aligned bits 0-15 of each data word. The task of translating the memory image 10 into a set of firing instructions (print image bits) for the array of print elements is straight forward. The sixteen bits of one data word are transferred in prallel directly to the correspondingly numbered print elements.

Some print heads have print elements arranged in a skewed fashion such as the print head 20 schematically illustrated in Figures 1 next to the image 10. Circles 26 of Fig. 1 represent the printing area or foot print of each of the print elements in the print head 20. A desired amount of vertical overlap between the foot prints of adjacent print elements 26 can be made to occur, as indicated at 27, by skewing the linear array of print elements 26 at a particular angle $\theta$ away from a vertical reference line 25. Printing in this second case calls for a special circuit which can transform the vertically organized memory image 10 into a plurality of otherwise organized bits. In order to maximize printing speed, the otherwise organized bits should be grouped such that they can actuate the print elements 26 of the skewed print head matrix 20 in a concurrent manner (simultaneous actuation).

U.S. Patent No. 4,485,386 to Dagna et al. discloses a skewing circuit for driving a linear array of print elements skewed at a particular angle. Each print element in the linear array is horizontally displaced by the same distance away from the print element preceding it so that a constant displacement value, K, can be used for reorganizing the original image data into an otherwise organized grouping of bits. U.S. Patent No. 4,567,570 to Peer discloses another skewing circuit for achieving substantially the same result. The disclosed circuits may be adapted to function with print head matrix arrangements of different skewing angles $\theta$ but they are not adaptable to function with non-standard print head arrangements wherein the print elements are individually positioned in other than linear arrays.

### SUMMARY OF THE INVENTION

It is an object of the present invention to provide improved circuit for transforming a linearly aligned source image into a print image of a different alignment. It is another object of the present invention to provide a circuit which can be programmed to reorganize source image data into print image data, where the latter is organized for actuating the elements of a print head and the elements are disposed at variable positions.

These and other objectives are met in accordance with one embodiment of the present invention by providing a data reorganizing circuit which includes an offset memory for storing individual position values corresponding to the position of each print element in a print head matrix relative to a preselected reference. The reorganizing circuit further includes a sequencer for sequencing through the stored position values and an addressing means for generating address offset values corresponding to the stored position values. The offset values are used to generate an addressing mask that is employed for picking off desired bits of a source image stored in a source image memory. An accumulator collects the picked off bits and assembles them into a new grouping (print image). The new grouping can be used to simultaneously actuate individually positioned elements of the print head matrix.

## BRIEF DESCRIPTION OF THE DRAWINGS

Fig. 1 is a diagram showing a known memory image grid next to a known linear print head matrix.

Fig. 2 diagrams a first non-linear matrix for which the present invention can be adapted.

Fig. 3 is a schematic diagram of a first data reorganizing circuit in accordance with a preferred embodiment of the present invention.

Fig. 4 is a timing diagram showing how the circuit of Fig. 3 can be operated.

Figs. 5A-5D are diagrams of other print head matrix arrangements.

Fig. 6 is a block diagram of another data reorganizing circuit in accordance with the present invention.

## DETAILED DESCRIPTION OF THE INVENTION

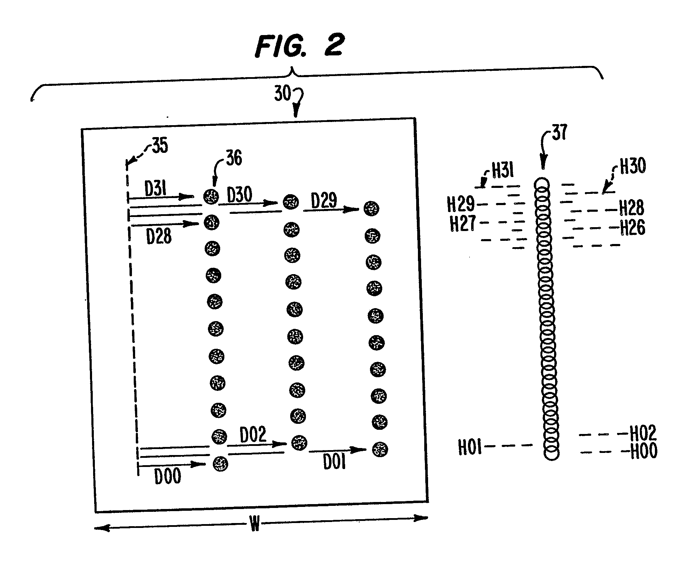

Figure 2 shows a first non-standard matrix 30 of print elements for which the present invention has been devised. Circles 36 represent the respective printing foot prints of the print elements. As can be seen, each print element 36 is displaced both vertically and horizontally from the print elements directly above and below it by different distances. The matrix 30 of print elements 36 is arranged in such a manner that a vertical overlap 37 of the foot prints can be obtained when printing a character which includes a vertical leg, as occurs in the character "1" for example. Vertical overlap is used for producing dot matrix fonts of a so called "near letter quality" (NLQ).

The horizontal displacements between the individual print elements 36 of the matrix 30 shown in Fig. 2 is particulary well suited for use with ink jet printers because such displacement minimizes the danger of merger or smearing between ink droplets that are closely spaced in the vertical direction. Moreover, when ink jet color printing is desired, it is convenient to have ink jets of different colored inks spaced apart from one another so that corresonding jets can be easily connected to ink supply manifolds of different colors. When an impact type of dot matrix printer is to be used for color printing, the shown pattern 30 is again desirable because print elements assigned to different colors can be aligned with appropriate portions of an ink ribbon having alternating color stripes.

It will be noted that the print elements 36 are arranged in a non-linear zig-zag fashion so that the width W of the print head matrix 30 can be made substantially smaller than that of the print head 20 shown in Figure 1. Each individual print element 36 of Fig. 2 is assigned to an individual one of a plurality of horizontal printing lines, labled H00-H31. A vertical reference line 35 is artificaly designated so that the location of each print element 36 can be specified by a respective individual displacement value, D00-D31.

The pattern of print elements shown in Figure 2 is, of course, just one of an almost infinite number of matrix organizations that can be devised for the technology of dot matrix printing. A differently arranged pattern can be represented simply by changing the displacement values D00-D31. If more than one print element is to occupy a horizontal printing line, the positions of individual print elements can be represented by x, y coordinates relative to a preselected reference grid. Each devised pattern can have its own unique advantages that may arise from factors such as whether the underlying printhead technology is based on impact wires, thermal printing elements, or ink jets; whether the print head is designed for monochrome or color printing; whether high or low printing resolution is required; and so forth. It is an object of the present invention to provide a data reorganizing circuit that can transform a source image of a first data organization into a print image of a second organization, where the second data organization can be varied and the bits in the secondly organized print image need to be grouped concurrently for simultaneous actuation of print elements arranged in any one of a random set of possible print head patterns.

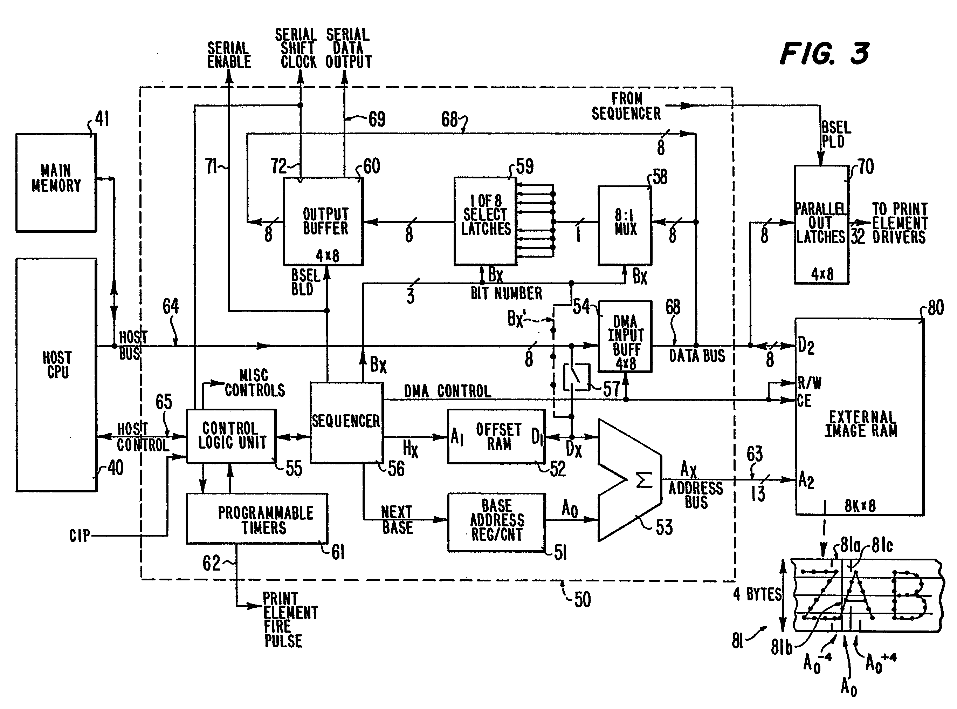

Figure 3 is a schematic diagram showing a slant logic integrated circuit chip (SLIC) 50 which has been divised for reorganizing a source image into a print image of a different organization (i.e. a skewed image). It is to be understood that the circuit of Fig. 3 represents a particular preferred embodiment rather than the only embodiment of the invention and should therefore not to be taken as limiting the scope of the invention. The SLIC chip 50 contains a base address register/counter 51 and a programmable offset memory (RAM) 52.

The base register 51 and offset memory 52 are connected to supply respectively, a prestored base address, $A_0$, and a set of prestored displacement values, $D_x$, to the inputs of an adder 53. The adder 53 generates a summed address $A_x = A_0 + D_x$ that is output from a thirteen-bit address bus 63 of the chip 50 to an external image RAM (random access memory) 80 having an 8K x 8 (bytes x bits) storage organization. The summed address $A_x$ can be altered to generate an addressing mask that picks off individually desired bits of a source image 81 stored in the image RAM 80.

The source image, shown in the right corner of Fig. 3 at 81, can be stored within the image RAM 80 on a continuously updated (circular buffer) basis so that the size of the image RAM 80 can be minimized. New data is over-written into in an expendable address range 81a (e.g. $A_0$-4 through $A_0$-1) of the image RAM 80 that has been occupied beforehand by an already processed portion of the source image 81. The source image in the RAM 80 can be continuously updated in a wrap around manner using such a scheme. The newly written data is retained until it is accessed for transformation into a print image of an organization different from that of the originally stored source image. A wrap-around boundary line 81b separates the expendable range 81a from an address range 81c (i.e. $A_0$ through $A_0 + 4$) containing data that is still be retained. For the sake of example, the source image data shown at 81 is illustrated to be organized as a plurality of vertical columns of 32 bits each, with every vertical column being represented by 4 consecutive bytes in the image RAM 80.

The SLIC chip 50 is able to control the original storage organization of the source image 81. New image data is periodically transferred in corresponding blocks of four bytes (32 bits), via a DMA (direct memory access) process, from a host computer 40, which has its own dedicated memory 41, through the SLIC chip 50 to the external image RAM 80. Image data previously transferred into the image RAM 80 is concurrently collated (using timewise multiplexing) into a desired print-image format having bits grouped for simultaneously actuating the individually positioned print elements 36 of a print head 30 such as shown in Fig. 2. The SLIC chip 50 is designed to handle by itself the time consuming tasks of collating the bits of the source image data 81, assembling them to form print image data of a different organization, and firing the print elements of a print head in accordance with a preprogrammed firing sequence. The host computer 40 is freed of these tasks so that it can spend more time on higher level tasks.

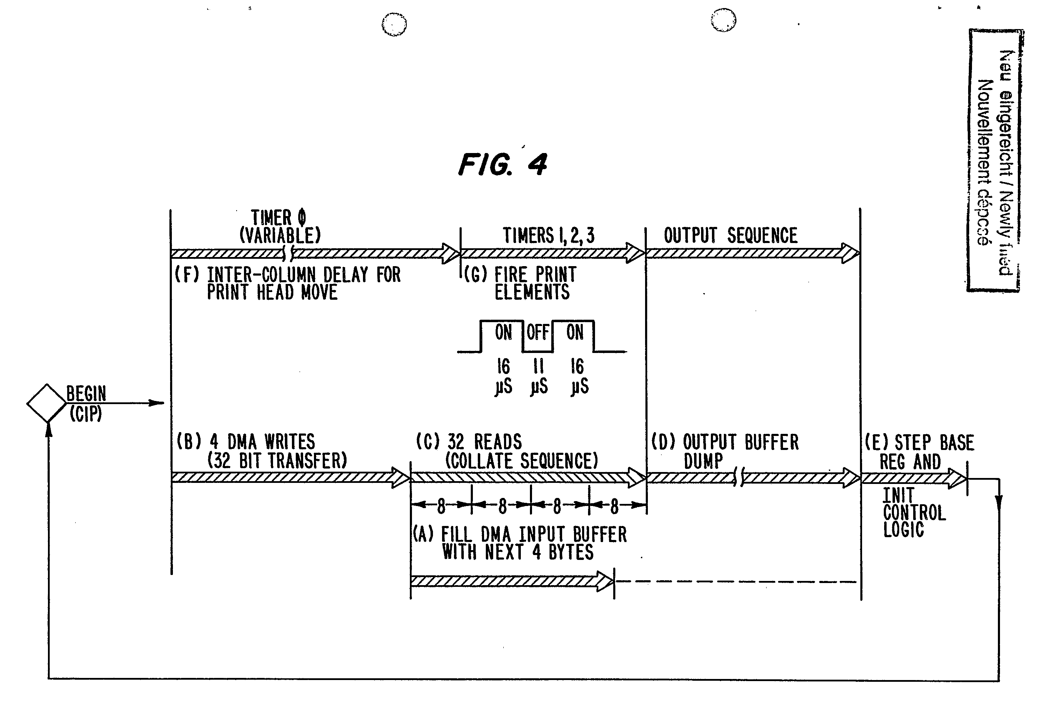

Figure 4 is a timing diagram showing one manner in which the SLIC chip 50 can be operated. During step (A) of Fig. 4, a DMA input buffer 54 (Fig. 3) is initialized by filling the buffer 54 with four bytes of source image data (32 bits). The four bytes are received from an eight bit wide host bus 64 that couples the host dedicated memory 41 to internal components of the SLIC chip 50. A host control bus 65, coupling the host CPU 40 to the SLIC chip 50, is used to coordinate the timing of host-to-SLIC chip data transfers.

At step (E) of Fig. 4, the base address register 51 is stepped to output a predetermined base address $A_0$. The base address $A_0$ designates a wrap around boundary 81b in the address space of the image RAM 80. The wrap around boundary 81b is represented by the vertical line to the left of $A_0$ in the source image 81 shown in Fig. 3. A control logic unit (CLU) 55 and a sequencer 56 are reset or initialized during this step (E). The SLIC chip 50 is then ready to begin a complete cycle which will now be described.

The cycle is started by applying a cycle initiation pulse (CIP) to the CLU 55. The cycle initiation pulse CIP can be supplied from a print head movement control circuit (not shown) of the printer when the print head is about to move to a new printing column. Upon receipt of the CIP signal, the control logic unit 55 activates the sequencer 56 and causes the sequencer 56 to supply a series of logical offset designations, $H_x$, to an address input $A_1$ of the programmable offset memory 52. By way of example, it will be assumed that the series of logical offset designations, $H_x$, consists of the series: -4, -3, -2, -1, 0, +1, +2, ... +30, +31. During this time, the base address $A_0$ being produced by the base address register 51 remains unchanged.

The programmable offset memory 52 transforms the logical offset series $H_x$ into a corresponding set of address displacement values $D_x$ in accordance with a data transformation table previously programmed into the offset memory 52 from the host computer 40. This transformation table is loaded during a system initialization process. A normally open bus switch 57 is closed between the host bus 64 and a data port $D_1$ of the offset memory 52 so that data can be written by the host computer 40 into the offset memory 52 during system initialization. The CLU 55 places the offset memory 52 into a write mode during the system initializtion process. For the sake of example, it will be assumed that the corresponding series of address displacement values $D_x$ preloaded into the transformation table of the offset memory 52 consists of: -4, -3, -2, -1, D00, D01, D02, ..., D30, D31; where the values D00-D31 correspond to the horizontal displacement distances of the print elements shown in Fig. 2.

Four DMA write operations are performed at step (B) of Fig. 4. Each DMA write corresponds to a respective one of the first four displacement values, -4, -3, -2, and -1, output by the programmable offset memory 52. The sequencer 56 at this time outputs a set of DMA control instructions which cause the DMA input buffer 54 to unload its previously stored four bytes of source image data through a data bus 68 of the SLIC chip to a data port $D_2$ of the external image RAM 80. For the sake of simplicity, miscellaneous control lines in the SLIC chip 50 are not individually shown. A chip enable line CE and a read/write line R/W of the external image RAM 80 are simultaneously actuated to place the image RAM 80 in a write mode. Since the adder 53 sums the base address $A_0$ with the output $D_x$ of the offset memory 52, the four bytes from the DMA input buffer 54 will be written into addresses $A_0$-4, $A_0$-3, $A_0$-2, and $A_0$-1 of the external image RAM 80. Data previously stored in these locations is overwritten by the four new bytes.

The SLIC chip 50 is then ready to proceed to collating step (C) of Fig. 4 wherein the sequencer 56 causes the external image RAM 80 to switch into a read mode. The summed address $A_x$ output by the adder 53 during this phase causes the thirty two memory locations: $A_0$ + D00, $A_0$ + D01, ..., $A_0$ + D30, and $A_0$ + D31 of the image RAM 80 to be read. Bytes stored in these memory locations are sequentially supplied into the data bus 68 of the SLIC chip 50 and transferred to the input of an eight-to-one multiplexer 58. The multiplexer 58 masks out one bit from among the eight bits on the data bus 68 in accordance with a bit number $B_x$ supplied from the sequencer 56. The bit number $B_x$ is stepped through a sequence such as 0, 1,...6, 7, 0, 1...6, 7,...., etc. while the summed address $A_x$ correspondingly steps through memory locations $A_0$ + D00, + D01, ..., A + D31. An appropriate bit position corresponding to each logical offset designation in the subset $H_x$ = 0, 1, ..., 31 is therefore picked off as the SLIC chip 50 proceeds through the collating sequence indicated at step (C). The picked off bit is then routed to and stored in one of eight selectable accumulation latches 59, the particular one accumulation latch being designated again by the bit number, $B_x$.

It should be mentioned at this point that while the bit number, $B_x$, is shown to be generated by the sequencer 56 in Fig. 3, it is not outside the contemplation of the present invention to generate an alternate bit number, $B'_x$, from the programmable offset memory 52 such as indicated by the chained line in Fig. 3. This alternate embodiment povides greater flexibility in selecting the particular bit position that is to be associated with each of the logical offset designations in the subset, $H'_x$ = 0, 1, 2, ... N-1, N being a sequence terminating number which designates the number of print elements for which collating is required. In this alternate embodiment (where the chained $B'_x$ line replaces the solid $B_x$ line), the host computer 40 is able to load a desired set of bit positioning numbers $B'_x$ and address offset values $D_x$ values for each of the logical designations, $H'_x$ = 0, 1, ..., N-1; as desired. It is furthermore within the contemplation of the present invention for the host computer 40 to be able to program the sequence terminating value N into the control logic unit 55, and to thereby control the number of sequencing steps carried out by the the sequencer 56 during a cycle.

After all eight of the selectable accumulation latches 59 have been loaded with bits picked off by the multiplexer 58, the accumulated set of eight bits is transferred to an output buffer 60 in the form of a completed byte. The sequencer 56 issues a byte load instruction, BLD, to the output buffer 60 each time eight bits have been collated and accumulated into the eight accumulation latches 59.

The output buffer 60 is constructed as four shift registers, with each shift register (not shown) being eight bits wide. The shift registers of the output buffer 60 are arranged such that they can transmit their stored data out of the SLIC chip 50 in a parallel and/or serial fashion.

Referring to step (D) of Fig. 4, when the four shift registers of the output buffer 60 have each been filled with a respective byte of collated data, the sequencer 56 addresses each one of the shift registers in sequence with a byte select signal, BSEL, to cause the contents of the selected shift register to be first presented on the data bus 68 for loading into an external set of optionally provided parallel output latches 70, and then to be serially shifted out of a serial data output line 69 provided on the SLIC chip 50. The SLIC chip 50 sends a parallel load signal, PLD, along with the byte select instruction, BSEL, to the parallel output latches 70 to coordinate a byte-by-byte parallel transmission of the already collated data to the external output latches 70. At the end of the parallel load operation, a serial enable signal 71 is issued indicating that the contents of the shift register selected by the BSEL instruction will be immediately shifted out on the serial data output line 69. The SLIC chip 50 then proceeds to shift out the entire contents of the output buffer 60 on the serial data output line 69. The SLIC chip 50 is provided with a serial shift clock line 72 for outputting synchronizing pulses that mark off respective time slots of each data bit being output on the serial data output line 69. The serial shift clock signal is generated by the control logic unit 55.

It is to be understood that the above described data dump sequence from the output buffer 60 is not the only one contemplated by the present invention. Those skilled in the art will appreciate that the output buffer dump sequence can be pipelined to commence immediately after the first eight bits of the accumulation latches 59 are accumulated. The output buffer 60 may then transmit those bits in either serial or parallel fashion out of the SLIC chip 50 while the next set of eight bits are being collated and accumulated in the accumulation latches 59.

Once the entire set of logical designation values, $H_x$ = -4, -3, -2, -1, 0, 1, ..., N-1 has been sequenced through for a first base address $A_0$, the SLIC chip 50 proceeds to step (E) of Fig. 4 wherein the base address register 51 is stepped forward or backward (depending on the printing direction of the print head) to point to a next vertical reference column (or wrap around boundary 81b) of the print image 81. In the case where forward printing is being conducted and each vertical column of the print image 81 consists of four bytes as shown in Fig. 3, the base address register 51 will be incremented forward by a count of four. When the end address of the external image RAM is reached, the base address register 51 simply wraps around to the beginning addresses of the image RAM 80 to thereby create a circular buffer effect. The step forward/step backward distance for the next base address $A_0$ of the base register/counter 51 can be pre-set into the SLIC chip 50 so that the chip may be used with source image data having a vertical height of any preselected number of bits.

At the same time that the base address register 51 is being stepped to the next base address $A_0$, the control logic unit 55 is reinitialized so that it is ready to begin the cycle anew when the next cycle initiation pulse CIP arrives.

While data is being collated from the external image RAM 80 at step (C), the SLIC chip 50 also concurrently issues a DMA request to the host computer 40 along the host control bus 65 so that the DMA input buffer 54 can be simultaneously filled with new data at step (A). Step (E) is not activated until the sequencer 56 has stepped through a cycle of four DMA writes into the DMA input buffer 54.

Furthermore, at the same time that the DMA transfer and collating sequences of steps (B) and (C) are taking place, the SLIC chip 50 is able to issue a firing command to actuate the print elements of a print head so that all print elements necessary for the next step will have been fired by the time that the output buffer 60 is ready to transmit a new set of print element actuation signals out on either of the data bus 68 or the serial data output line 69. To accomplish this, the SLIC chip 50 is provided with a set of programmable timers 61.

The timers 61 are programmed during a system initialization procedure by the host computer 40 to contain time delay values corresponding to the time it takes for movement of the print head to a new printing column and also corresponding to a set of specific firing times required for the actuation of the print elements. The SLIC chip 50 includes a fire command output line 62 for issuing one or more print element fire pulses (firing command).

In some types of printing, it is desirable to fire each print element more than once. This occurs for example, when the printed image is to have a bolder appearance than that of surrounding text. Another example of such a requirement for multiple firing is when the selected printing technology operates optimally with multiple firings. In one particular type of print head for which the SLIC chip 50 has been devised; the particular type being a hot melt ink jet printer using piezoelectric acutators to eject hot melt ink droplets, it has been found that optimal results are obtained when the ink jets are energized by a pair of sixteen microsecond ON pulses which are separated by an eleven microsecond OFF period. The programmable timers 61 are adapted to be programmed by the host computer 40 to accomodate, at least in part, the particular timing needs of this and other kinds of printing technologies. A plurality of (e.g. four) programmable timers 61 are included in the SLIC chip 50 to generate a set of preprogrammed timing signals for the firing of the print elements.

It will be appreciated that each particular printer may have a different time delay for moving a print head from one printing column to the next. As such, steps (F) and (G) of Fig. 4 designate variable times that may be programmed into the programmable timers 61 to represent the inter-column movement delay of the printer as well as the optimal firing pulse times of the printer. New data is preferably not transmitted from the output buffer 60 at step (D) until the firing sequence of step (G) has been completed. The sequencer 56 and control logic unit 55 are used to coordinate the two events.

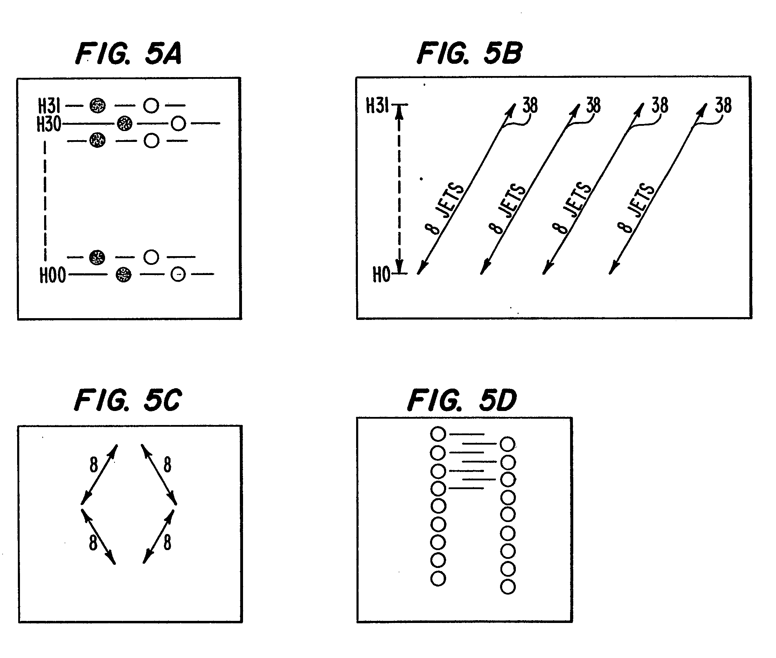

Referring now to Figs. 5A-5D, other non-standard matrix arrangements for which the SLIC chip 50 can be employed will be explained. It should be appreciated that each of the illustrated matrix arrangements requires a different address overlay mask for picking off the corresponding bits of a source image and routing those bits to their respective print elements.

Fig. 5A shows a matrix arrangement in which more than one print element is located on each of thirty two horizontal printing lines, H00-H31. The plural set of print elements on each horizontal lines can be used for simultaneously printing plural pixels of a source image belonging to alternate (i.e. odd/even) vertical columns of that source image. If one print element in a horizontal line malfunctions, the matrix of Fig. 5A can be switched to print one pixel less at a time on each horizontal line. The SLIC chip 50 of Fig. 3 can be combined with the matrix of Fig. 5A and configured by a host computer to adapt to either of these printing modes. In the parallel printing mode (two or more print elements being simultaneously actuated on each horizontal line), the sequencer terminating number, N, is set to 64 while the step forward/step backward distance of the base address $A_0$ is set equal to the address spacing between two or more vertical columns. Alternatively, two SLIC chips 50, each preprogrammed to actuate thirty two print elements, may be operated in parallel to achieve the same result. If a print element malfunctions on one of the horizontal printing lines, the SLIC chip or chips, 50, can be reprogrammed to process a fewer number of printing columns at a given time. The step forward/step backward distance of the base register 51 is altered to step by one vertical column less in this latter case. As such, a printer using the matrix organization of Fig. 5A can continue to print even though one of the print elements malfunctions.

Fig. 5B shows another matrix organization which, as illustrated, employs thirty two print elements. The print elements are distributed in a staggered fashion over four skewed lines 38. The skewed lines 38 of the staggered arrangement can be adapted to coincide with colored stripes on a multicolor print ribbon such as commonly used with impact printers, or in the case of an ink jet printer, to be coupled to individual ink wells (reservoirs), where each ink well can be filled with a different colored ink.

A so called "spider layout" is illustrated in Fig. 5C. A "dual parallel" pattern is shown in Fig. 5D. These patterns can likewise be adapted for a plurality of different printing modes including color printing, multiple line printing, and high resolution printing, as desired. One or more SLIC chips 50 can be operatively coupled to any one of the matrices of Figs. 5A-5D and can be suitably programmed by a host computer 40 to work with any of these or other patterns.

Persons skilled in the art will realize that aside from its ability to compensate for the variable positioning of print elements, the SLIC chip 50 can also be programmed to create a desired amount of skew or italicization in a portion of text simply by distorting the discplacement values D00-Dnn.

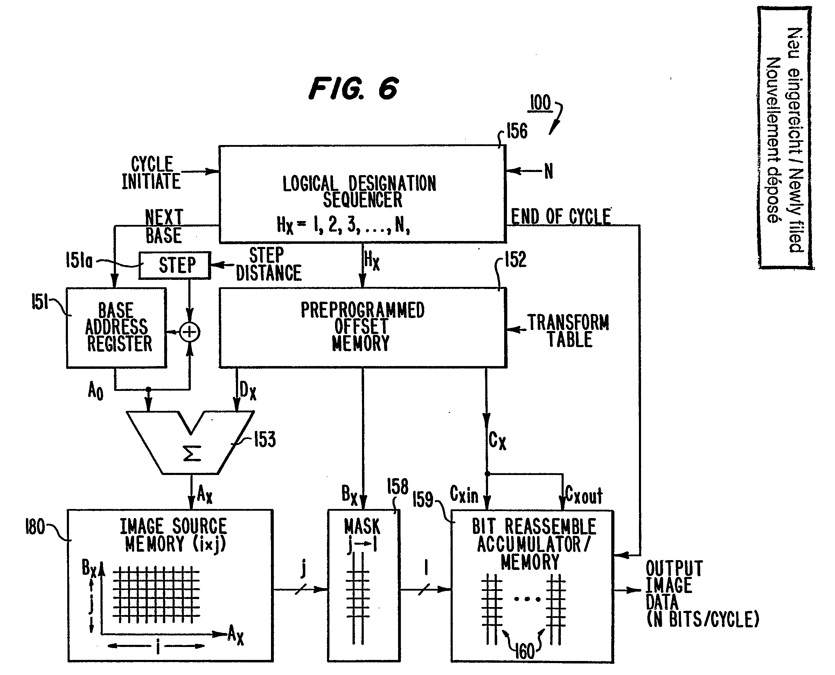

Those skilled in the art will appreciate that the circuit of Fig. 3 can be modified to afford even greater flexibility if such flexibility is desired. Fig. 6 is a block diagram of another data reorganizing circuit 100 in accordance with the present invention. Elements of this second data reorganizing circuit 100 are referenced with numbers corresponding to those of Fig. 3 to facilitate the explanation. A logical designation sequencer 156 generates a series of logical designation numbers, $H_x$, including the subset $H_x' = 1, 2, 3, ..., N$; where N is a sequence terminating number which is loaded into the logical designation sequencer 156 from a host computer system (not shown). The logical designation numbers, $H_x$, are supplied to the address input of a preprogrammed offset memory 152. The offset memory 152 includes a transformation table which has been previously loaded from the host computer system. A set of address offsets, $B_x$, $C_x$ and $D_x$, are output from the offset memory 152 in response to the logical designation numbers $H_x$ applied at its input. A first of the offsets, $D_x$, is coupled to a first summing input of an adder means 153. A second of the offsets, $B_x$, is applied to a bit masking means 158. The third offset, $C_x$, is applied to input and output selection controls, $C_{xin}$ and $C_{xout}$, of a bit reassembling accumulator 159.

A cycle initiate signal is applied to the logical designation sequencer 156 to initiate the series $H_x$ of logical designation numbers. At the end of each sequence, the sequencer 156 outputs a next base command to a base address register 151 to cause the register 151 to increment or decrement a base address, $A_0$ stored therein by a predetermined amount, STEP DISTANCE, the later being a value stored in a step register 151a. The base address $A_0$ is applied to a second summing input of the adder means 153. The adder means 153 outputs a summed address $A_x$ to the address input of an image source memory 180. The image source memory 180 is organized as a first integral number, i, of addressable data words each consisting of a second integral number, j, of bits. The bits of an addressed data word in the image source memory 180 are output to the bit masking means 158 so that a particular one (or more) of the bits stored in the image source memory 180 can be addressed by a bit addressing means comprising the adding means 153 and the masking means 158. The individually addressed bits are then routed to the bit reassembling accumulator 159 wherein they are reassembled into output image data words 160 of N (or less) bits apiece. The routing of an individual bit from the masking means 158 to a bit position in a particular output image word is controlled by the input offset $C_{xin}$.

At the end of each sequence of logical designation numbers, $H_x$, the sequencer 156 outputs an end of cycle signal to the bit reassembling accumulator 159. This signal indicates to the bit reassembling accumulator 159 that an output image data word 160 has been completed and is ready to be transmitted out of the reorganization circuit 100. The output offset $C_{xout}$ designates which of the already assembled output image data words 160 is to be transmitted out of the circuit 100.

The advantages obtained from the flexibility of the second image reorganizing circuit 100 should, of course, be balanced against the cost of each programmable element. If the length of the logical designation sequence $H_x = 1, 2, 3, ..., N$ is to remain constant, then the ability to load a variable terminating number, N, may be dispensed with and the complexity of the circuit 100 can be reduced. If the vertical height (j dimension) of the source image in the memory 180 is to always remain constant, then the ability to program the step distance into the step register 151a can also be dispensed with. Furthermore, when the input/output sequencing of the bit reassembling accumulator 159 does not have to be variable, the address offset $C_x$ in the transformation table of the offset memory 152 may also be eliminated.

Numerous variations within the spirit of the present invention will, of course, become apparent to those skilled in the art, some being matters of mere design choice and others being arrived at from a detailed study of the embodiments disclosed herein. As such, the scope of the present invention should not be limited to the particular embodiments disclosed but should rather be defined by the appended claims and equivalents thereof.

**Claims**

1. A data reorganizing system comprising:
a logical sequencer means for generating a set of logical designation numbers, where one or more of the logical designation numbers corresponds to a respective one or more bits in a bit mapped source image;
an addressing means for addressing individual bits of the bit mapped source image, the addressing means including an adder means for generating a summed address that designates a set of one or more bits in the bit mapped source image, the adder means including first and second summing inputs;
a programmable offset memory means, coupled to receive the logical designation numbers of the sequencer means, for transforming the logical designation numbers into a corresponding set of address offset numbers in accordance with a prestored transformation table, the offset memory means being coupled to output the offset numbers to the first summing input of the adder means; and
a base address register means for storing a base address, the base address means being coupled to output the base address to the second summing input of the adder means.

2. A data reorganizing system according to claim 1 further comprising a table loading means for loading the transformation tale into the programmable memory means.

3. A data reorganizing system according to claim 2 further comprising a bit accumulating means, responsive to the sequencer means, for accumulating source image bits addressed by the addressing means.

4. A data reorganizing system according to claim 1 further comprising:
a bit number generating means for generating a set of bit numbers corresponding to the set of logical designation numbers; and
a bit selecting means, responsive to the bit number generating means, for selecting one or more bits designated by the bit numbers of the bit number generating means.

5. A data reorganizing system according to claim 4 further comprising:
a bit reassembling means, coupled to the bit selecting means, for grouping bits selected by the bit selecting means into print image data words, where the grouped bits of each print image data word are arranged such that they can be accessed substantially at the same time.

6. A data reorganizing system according to claim 5 further comprising a print image storage means for storing one or more of the print image data words.

7. A data reorganizing system according to claim 1 further comprising a programmable timing means for generating one or more print element actuating pulses of predetermined durations.

8. A data reorganizing system according to claim 1 further comprising a source image memory means for storing the bits of the source image, the source image memory means being operatively coupled to the addressing means so as to be responsive to the summed address generated by the adder means.

9. A method for simultaneously actuating print elements of a print head that are displaced from a reference by individual distances, comprising:
storing in an offset memory, a plurality of address offset values corresponding to the individual displacements of the print elements away from the reference;
generating a base address;
outputting the plurality of address offset values and summing each of the address offset values with the base address to thereby generate a corresponding plurality of summed addresses; and
applying the summed addresses to an address port of a source image memory to thereby access a plurality of bits from the source image memory corresponding to the individually displaced print elements of the print head.

FIG. 1
(PRIOR ART)

BIT NO.

WORD/BIT MAPPED
MEMORY IMAGE

WORD NO.

LINE NO.

PRINT HEAD
MATRIX

VERTICAL
OVERLAP

EP 0 310 217 A2

EP 0 310 217 A2

## FIG. 2

30

35

36

D31 D30 D29

D28

D02 D01

D00

W

37

H31 H30

H29 H28
H27 H26

H01 H02
H00

FIG. 3

EP 0 310 217 A2

Neu eingereicht / Newly filed
Nouvellement déposé

EP 0 310 217 A2

## FIG. 4

TIMER Ø
(VARIABLE)

TIMERS 1, 2, 3

OUTPUT SEQUENCE

(F) INTER-COLUMN DELAY FOR
PRINT HEAD MOVE

(G) FIRE PRINT
ELEMENTS

| ON | OFF | ON |
|----|-----|----|
| 16 µS | 11 µS | 16 µS |

BEGIN
(CIP)

(B) 4 DMA WRITES
(32 BIT TRANSFER)

(C) 32 READS
(COLLATE SEQUENCE)

(D) OUTPUT BUFFER
DUMP

(E) STEP BASE
REG AND

INIT
CONTROL
LOGIC

|←8→|←8→|←8→|←8→|

(A) FILL DMA INPUT BUFFER
WITH NEXT 4 BYTES

*FIG. 5B*

38  38  38  38

8 JETS  8 JETS  8 JETS  8 JETS

H31

H0

*FIG. 5A*

H31
H30

H00

*FIG. 5D*

*FIG. 5C*

8  8

8  8

## FIG. 6

EP 0 310 217 A2